# EUROPEAN PATENT APPLICATION

(11) **EP 2 728 709 A1**
(43) Date of publication of application: **07.05.2014**
(21) Application number: 12803943.5
(22) Date of filing: 28.06.2012
(51) Int. Cl.: H02J 17/00, H02J 7/00

(54) **ELECTRICAL POWER TRANSMISSION SYSTEM**

(30) Priority: 30.06.2011 JP 2011146494
(71) Applicant: Equos Research Co., Ltd., Chiyoda-ku Tokyo 101-0021 (JP)
(72) Inventor: YAMAKAWA, Hiroyuki, Tokyo 101-0021 (JP)
(74) Representative: TBK
(86) International application number: PCT/JP2012/066513
(87) International publication number: WO 2013/002319

(57) **Abstract**

A power transmission system according to the present invention can quickly select an optimum frequency for power transmission and curtail the time to be spent for power transmission. The power transmission system comprises an inverter section (130) for outputting AC power of a predetermined frequency, a power transmission antenna (140) for receiving AC power from the inverter section (130) as input and a control section (150) for controlling the frequency of the AC power output from the inverter section (130) and computationally determining the inverter efficiency of the inverter section (130) for the purpose of transmitting electric energy to a power reception antenna (210) disposed oppositely relative to the power transmission antenna (140) by way of an electromagnetic field and is characterized in that the control section (150) controls the system by computationally determining the inverter efficiency, while lowering the operational frequency from an upper limit frequency by a predetermined unit frequency at a time, and selecting the frequency that provides the highest inverter efficiency for the system to transmit power.

## Description

### Technical Field

The present invention relates to a wireless electric power transmission system that employs magnetic resonance antennas on the basis of the magnetic resonance method.

### Background Art

Various advanced techniques for wireless transmission of electric power (electric energy) without using any power cords have been developed in recent years. Among the known wireless power transmission methods, the magnetic resonance method represents techniques that are particularly attracting attention. The magnetic resonance method is proposed by a research group of the Massachusetts Institute of Technology in 2007. As an example, Patent Literature 1 (Japanese PCT National Publication No. 2009-501510) discloses a technique relating to the magnetic resistance method.

A wireless electric power transmission system using the magnetic resonance method can efficiently transmit energy from a transmission side antenna to a reception side antenna by making the resonance frequency of the transmission side antenna and the resonance frequency of the reception side antenna agree with each other. Such a system is remarkably characterized by being able to extend the power transmission distance to somewhere between tens of several centimeters and several meters.

If, for example, the reception side antenna of the coupled antennas of a wireless electric power transmission system of the magnetic resonance method is mounted on a mobile body such as an electric automotive vehicle, the positional relationship between the antennas is changed from the immediately preceding one each time the electric automotive vehicle gets into a parking zone for the purpose of power transmission and battery charging. Then, the frequency that gives rise to an optimum power transmission efficiency is also changed from the immediately preceding one. In view of this problem, techniques for determining an optimum frequency at the time of power transmission for charging the battery of an electric automotive vehicle with electricity by way of a frequency sweep have been proposed. For instance, Patent Literature 2 (JP2010-68657A) discloses a wireless electric power transmission device comprising an AC power output means for outputting AC power of a predetermined frequency, a first resonance coil and a second resonance coil disposed opposite to the first resonance coil, the AC power output from the AC power output means being output to the first resonance coil so as to transmit the AC power to the second resonance coil in a non-contact manner by means of a resonance phenomenon, characterized in that it further comprises a frequency selection means that measures the resonance frequency of the first resonance coil and the resonance frequency of the second resonance coil and selects a frequency that is found between the resonance frequencies as the frequency for the AC power to be output from the AC power output means
[Patent Literature 1]
   Japanese PCT National Publication No. 2009-501510
[Patent Literature 2]
   JP2010-68657A

### Disclosure of the Invention

### [Problem to Be Solved by the Invention]

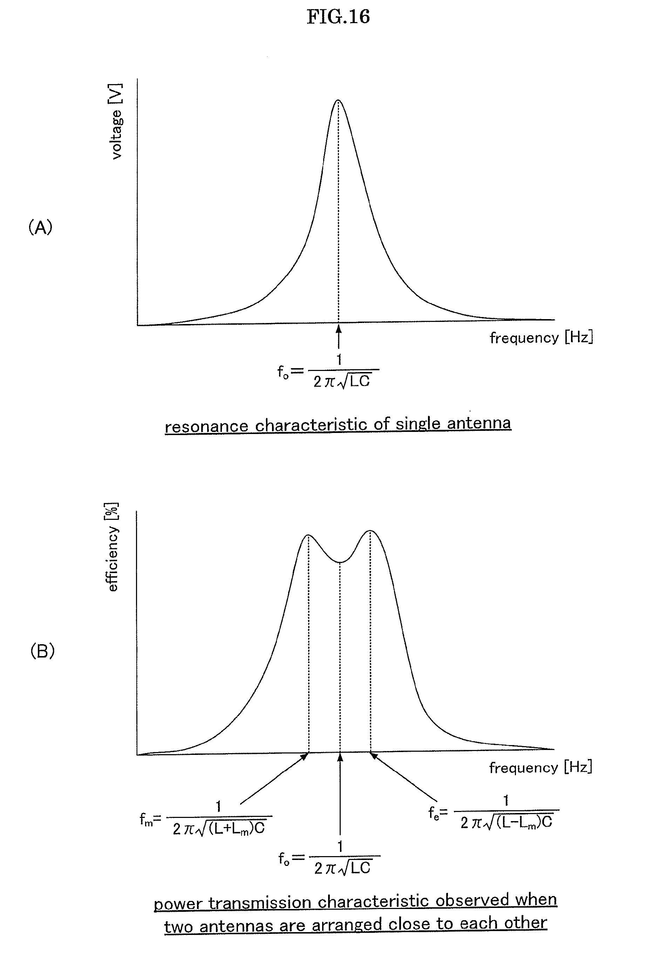

FIGS. 16A and 16B of the accompanying drawings schematically illustrate the characteristics of antennas for power transmission that can be used in a power transmission system. More specifically, FIG. 16A illustrates the resonance characteristic of a single antenna for power transmission and FIG. 16B illustrates the power transmission characteristic that is obtained when a transmission side antenna for power transmission is held in the vicinity of a reception side antenna for power transmission. Note that FIGS. 16A and 16B are shown only as an example. In FIGS. 16A and 16B, L denotes the inductance component of each of the antennas for power transmission and C denotes the capacitance component of each of the antennas for power transmission, while Lm denotes the mutual inductance component of the antennas for power transmission.

With a wireless power transmission system using the magnetic resonance method, when there are a first extremal frequency fₘ and a second extremal frequency fₑ as shown in FIG. 16B, it is preferable to select the second extremal frequency fₑ. The reason why the selection of the second extremal frequency fₑ is preferable is that a more stable power transmission can be realized by using the second extremal frequency fₑ as will be described in greater detail hereinafter under "the Best Mode for Carrying Out the Invention".

However, for the known technique as described in Patent Literature 2, it is not possible to sweep frequencies and quickly select the second extremal frequency fₑ in a manner as described above so that power transmission is a time consuming operation for the technique.

### [Means for Solving the Problem]

In an aspect of the present invention, the above identified problem can be dissolved by providing a power transmission system comprising an inverter section for outputting AC power of a predetermined frequency, a power transmission antenna for receiving AC power from the inverter section as input and a control section for controlling the frequency of the AC power output from the inverter section and computationally determining the inverter efficiency of the inverter section for the purpose of transmitting electric energy to a power reception antenna disposed oppositely relative to the power transmission antenna by way of an electromagnetic field, characterized in that the control section controls the system by computationally determining the inverter efficiency, while lowering the operational frequency from an upper limit frequency by a predetermined unit frequency at a time, and selecting the frequency that provides the highest inverter efficiency for the system to transmit power.

In another aspect of the present invention, there is provided a power transmission system comprising an inverter section for outputting AC power of a predetermined frequency, a power transmission antenna for receiving AC power from the inverter section as input and a control section for controlling the frequency of the AC power output from the inverter section and computationally determining the inverter efficiency of the inverter section for the purpose of transmitting electric energy to a power reception antenna disposed oppositely relative to the power transmission antenna by way of an electromagnetic field, characterized in that the control section controls the system by computationally determining the inverter efficiency, while lowering the operational frequency from an upper limit frequency by a predetermined unit frequency at a time, and, when the computationally determined inverter efficiency falls below the inverter efficiency that was computationally determined last time, selects the inverter efficiency that was computationally determined last time to transmit power.

### [Advantages of the Invention]

Thus, a power transmission system according to the present invention computationally determines the inverter efficiency, while lowering the frequency from an upper limit frequency by a predetermined unit frequency at a time, and selects the frequency that provides the highest inverter efficiency for the system in order to transmit power. More specifically, a power transmission system according to the present invention selects a second extremal frequency that ensures a stable operation of power transmission such that the voltage does not undesirably rise if the load to the system abruptly falls. Therefore, a power transmission system according to the present invention can curtail the time to be spent for power transmission.

### Brief Description of the Drawings

FIG. 1 is a schematic block diagram of an embodiment of power transmission system according to the present invention.
FIG. 2 is a schematic illustration of an exemplar vehicle provided the embodiment of power transmission system according to the present invention.
FIG. 3 is a schematic circuit diagram of the inverter section of the embodiment of power transmission system according to the present invention.
FIG. 4 is a graph illustrating a charging profile of the battery of the embodiment of power transmission system according to the present invention.
FIG. 5 is a flowchart of the charger control process of the embodiment of power transmission system according to the present invention.
FIG. 6 is an exploded schematic perspective view of a power reception antenna 210 that can be used for the embodiment of power transmission system according to the present invention.
FIG. 7 is a schematic cross-sectional view of the power reception antenna and a power transmission antenna that can be used for the embodiment of power transmission system according to the present invention, illustrating how power is transmitted between the antennas.
FIG. 8 is a flowchart of the power transmission frequency determining process of the embodiment of power transmission system according to the present invention.
FIG. 9 is a schematic graph schematically illustrating an optimum frequency determining process by sweeping.
FIGS. 10A through 10D are graphs illustrating relationships between the frequency and the power transmission efficiency that can be observed in the embodiment.
FIG. 11 is a schematic illustration of the electric current and the electric field that are observed at a first extremal frequency.
FIG. 12 is a schematic illustration of the electric current and the electric field that are observed at a second extremal frequency.
FIGS. 13A) and 13B are graphs schematically illustrating the transmission side characteristic and the reception side characteristic at an extremal frequency (first frequency) that gives rise to a magnetic wall out of the extremal frequencies that provide two extremal values.
FIGS. 14A and 14B are graphs schematically illustrating the transmission side characteristic and the reception side characteristic at another extremal frequency (second frequency) that gives rise to an electric wall out of the extremal frequencies that provide two extremal values.
FIG. 15 is a flowchart of the power transmission process of the embodiment of power transmission system according to the present invention.
FIGS. 16A and 16B are schematic illustration of the characteristics of an antenna for power transmission that can be used in a known power transmission system.

### [Mode for Carrying Out the Invention]

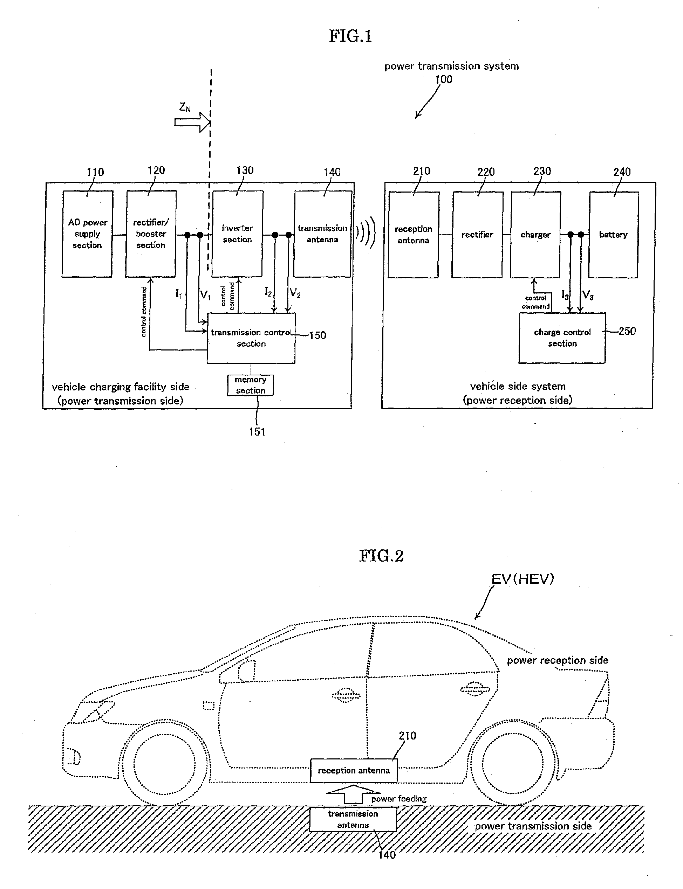

Now, the present invention will be described in greater detail by referring to the accompanying drawings that illustrate an embodiment of the invention. FIG. 1 is a schematic block diagram of an embodiment of power transmission system according to the present invention and FIG. 2 is a schematic illustration of an exemplar vehicle having the embodiment of power transmission system 100 according to the present invention mounted therein. The power transmission system 100 of the present invention can suitably be used for charging the vehicle-mounted battery of an electric automotive vehicle (EV) or a hybrid electric automotive vehicle (VEH), for example, with electricity. For the operation of charging the battery, a power reception antenna 210 is arranged at the bottom section of the vehicle so that the battery can receive power.

For the power transmission system 100 of this embodiment, a vehicle parking space that allows the vehicle to park therein needs to be provided so that electric power can be transmitted to the vehicle in a contactless manner. A power transmission antenna 140 etc. of the power transmission system 100 of this embodiment are buried underground in the vehicle parking space, which is a space for charging the vehicle with electricity. Thus, the vehicle user can park the vehicle in the vehicle parking space that is provided with the power transmission system of this embodiment and transmit electric energy to the power reception antenna 210 mounted in the vehicle from the power transmission antenna 140.

Since the power transmission system 100 of this embodiment is utilized in an above-described manner, the positional relationship between the power transmission antenna 140 and the power reception antenna 210 changes each time when an operation of power transmission is conducted and hence the frequency that provides an optimum power transmission efficiency also varies accordingly. For this reason, an optimum frequency is determined for each operation of power transmission by sweeping frequencies prior to actually transmitting power for charging after a stable positional relationship is established between the power transmission antenna 140 and the power reception antenna 210.

Rectifier/booster section 120 of the vehicle charging facility (transmission side) has a converter for converting the AC voltage from AC power supply section 110 that may be a commercial power supply into a constant DC and boosts the output of the converter to a predetermined voltage level. The voltage produced by the rectifier/booster section 120 can be controlled by power transmission control section 150.

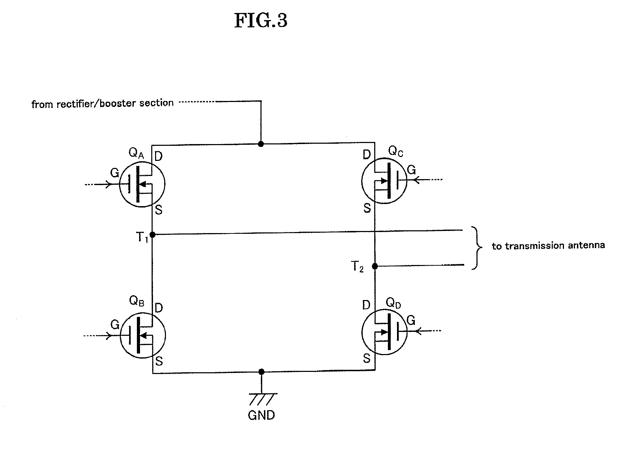

Inverter section 130 generates a predetermined AC voltage from the DC voltage supplied from the rectifier/booster section 120 and inputs it to power transmission antenna 140. FIG. 3 is a schematic circuit diagram of the inverter section of the embodiment of power transmission system according to the present invention. As shown in FIG. 3, the inverter section 130 is formed by four field effect transfers (FETs) Q_{A} through Q_{D} that are connected in a bridge connection mode.

In this embodiment, power transmission antenna 140 is connected between connection section T1 disposed between the switching element Q_{A} and the switching element Q_{B} that are connected in series and connection section T2 disposed between the switching element Q_{C} and the switching element Q_{D} that are also connected in series. Thus, an AC voltage is generated with a rectangular waveform between the connection section T1 and the connection section T2 as the switching element Q_{B} and the switching element Q_{C} are turned off while the switching element Q_{A} and the switching element Q_{D} are turned on or as the switching element Q_{A} and the switching element Q_{D} are turned off while the switching element Q_{B} and the switching element Q_{C} are turned on.

A drive signal for the switching elements Q_{A} through Q_{D} that forms the inverter section 130 in the above-described manner is input from the power transmission control section 150. The frequency that is used to drive the inverter section 130 can be controlled also from the power transmission control section 150.

The output from the inverter section 130 is supplied to the power transmission antenna 140. The power transmission antenna 140 is formed by using a coil having an inductance component as will be described in greater detail hereinafter and can transmit electric energy it outputs to the power reception antenna 210 as it resonates with the power reception antenna 210 that is mounted in the vehicle and be disposed oppositely relative to the power transmission antenna 140.

When the output from the inverter section 130 is input to the power transmission antenna 140, the impedance of the output may be made to be a matching one by means of an impedance matching transformer (not shown). A impedance matching transformer can be formed by using a passive element having a predetermined circuit constant.

The power transmission system of this embodiment of the present invention is designed to efficiently transmit energy from a power transmission side antenna to a power reception side antenna in an attempt of efficiently transmitting electric power to the power reception antenna 210 at the power reception side by making the resonance frequency of the power transmission antenna 140 to be equal to the resonance frequency of the power reception antenna 210.

The voltage V₁ and the electric current I₁ that are input to the inverter section 130 and the voltage V₂ and the electric current I₂ that are output from the inverter section 130 are observed by the power transmission control section 150. With this arrangement, the power transmission control section 150 can get the value of the output electric power (W₁ = V₁ x I₁) that is input to the inverter section 130 from the voltage V₁ and the electric current I₁ that are observed and also get the value of the output electric power (W₂ = V₂ × I₂) that is output from the inverter section 130 from the voltage V₂ and the electric current I₂ that are also observed. The power transmission control section 150 includes a general purpose information processing section that is formed by a CPU, a ROM that holds the programs to be operated on the CPU, a RAM that provides a work area for the CPU and other components. Thus, it computationally determines the efficiency (W₁/W₂) of the inverter section 130 from the input power (W₁) and the output power (W₂) it gets.

Memory section 151 of the power transmission section 150 is a temporary storage means for storing the frequencies that are swept in a frequency sweep operation and the corresponding inverter efficiencies that are computationally determined in association with each other. The power transmission control section 150 operates to control the output power of the inverter section 130 so as to make it show a predetermined power level, computationally determining the inverter efficiency of the inverter section 130, while shifting the frequency of the AC voltage being output from the inverter section 130, and store the computationally determined values in the memory section 151.

The power transmission control section 150 executes an actual operation of power transmission for charging, controlling the voltage of the DC voltage output from the rectifier/booster section 120 and the frequency of the AC voltage output from the inverter section 130.

Now, the configuration of the part of the power transmission system 100 that is installed in the vehicle, will be described below. In the system of the power reception side of the vehicle, the power reception antenna 210 receives electric energy output from the power transmission antenna 140 as it resonates with the power transmission antenna 140.

The AC power received at the power reception antenna 210 is rectified by rectifier 220 and the rectified power is stored in battery 240 by way of charger 230. The charger 230 controls the charge of the battery 240 according to the command given from charge control section 250. While this embodiment is described above in terms of charging the battery 240, using the battery 240 as load of the power reception side system, some other load may alternatively be used as load of the power reception side system.

The voltage V₃ and the electric current I₃ that are input to the battery 240 from the charger 230 are observed by the charge control section 250. The charge control section 250 is so configured as to be able to control the charger 230 by referring to the voltage V₃ and the electric current I₃ that are measured so as to make the charging operation proceed along an appropriate charging profile of the battery 240. The charger 230 can charge the battery 240 with electricity selectively on a constant current basis, on a constant output basis or on a constant voltage basis.

The charge control section 250 includes a general purpose information processing section that is formed by a CPU, a ROM that holds the programs to be operated on the CPU, a RAM that provides a work area for the CPU and other components and cooperates with the components that are connected to the charge control section 250 and illustrated in the related drawings.

The charge control section 250 stores a charging profile of the battery 240 and also an algorithm for making the operation of the charge control section 250 proceed along the profile.

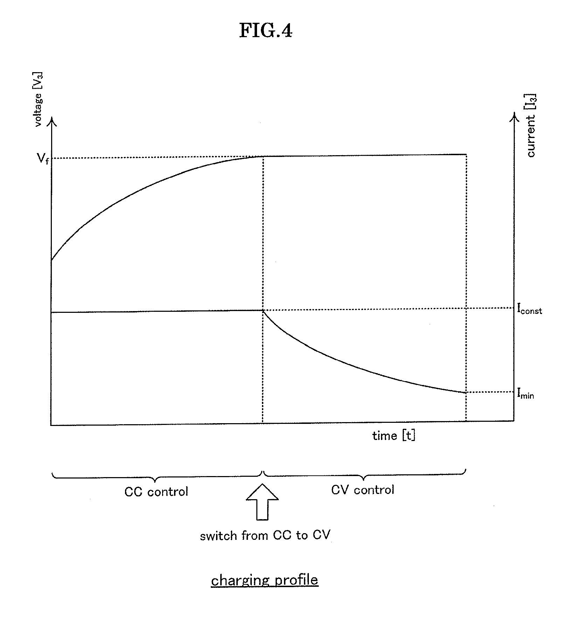

FIG. 4 is a graph illustrating a charging profile 260 of the battery 240 of the embodiment of power transmission system according to the present invention. The charging profile 260 is shown only as an exemplar charging profile of the battery 240 and some other profile may be employed for charging the battery 240.

The charging profile of FIG. 4 is one adapted to a charging operation that starts from a state of the battery 240 where the electricity stored in the battery has mostly been consumed. With the illustrated charging profile 260, firstly a constant current charging operation (CC control) of charging the battery 240 with a constant electric current I_{const} is conducted. Thereafter, when the terminal voltage of the battery 240 becomes equal to Vf, a constant voltage charging operation (CV control) of maintaining a constant charging voltage is conducted. Finally, the charging operation is terminated when the electric current that is flowing into the battery 240 becomes equal to Iₘᵢₙ during the constant voltage charging operation.

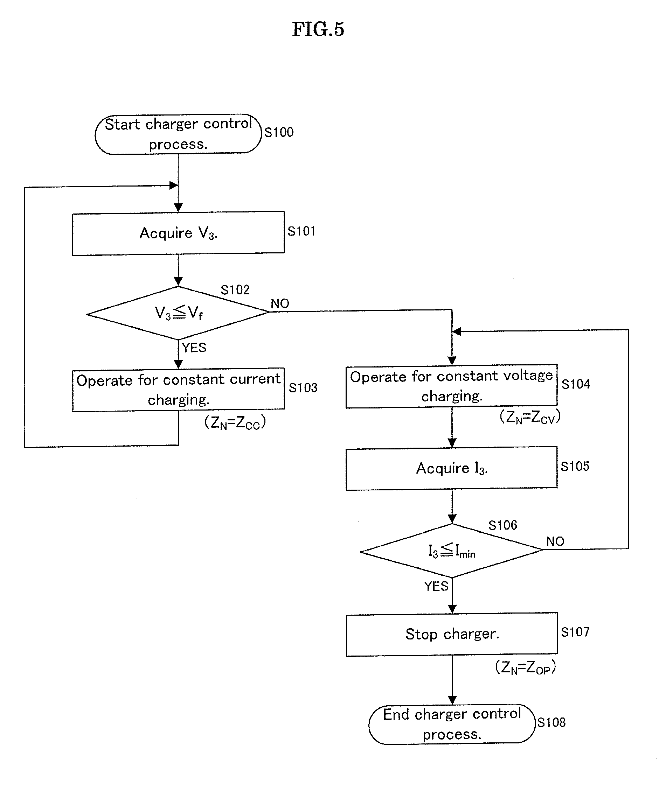

Now, the flowchart (algorithm for the charging profile 260) that is followed by the charge control section 250 in order to control the charger 230 will be described below. FIG. 5 is a flowchart of the control process for controlling the charger 230 of the power transmission system of this embodiment of the present invention.

Referring to FIG. 5, as the control process for controlling the charger 230 is started in Step S100, the terminal voltage V₃ of the battery 240 is acquired in Step S101. If V₃≤V₁ or not is determined in Step S102.

If the answer to the question if V₃≤V₁ in Step S102 is positive, or YES, the process proceeds to Step S103, where a constant current charging operation is started. Note that, at this time, the impedance Z_{N} as viewed from the transmission side is equal to Z_{CC}.

If, on the other hand, the answer to the question in Step S102 is negative, or NO, the process proceeds to Step S104, where a constant voltage charging operation is started. Note that, at this time, the impedance Z_{N} as viewed from the transmission side becomes equal to Z_{CV} that differs from Z_{CC}. This is because the voltage of the battery changes as a function of the charged state of the battery and hence the impedance also changes.

Then, in Step S105, the value of the electric current I₃ that is flowing into the battery 240 is acquired. In Step S106, if I₃≤Iₘᵢₙ or not is determined.

If the answer to the question in Step S105 is negative, or NO, the process returns to Step S104 to get on a loop. If, on the other hand, the answer to the question in Step S105 is positive, or YES, the process proceeds to Step S107, where the operation of the charger 230 is terminated to end the control process of controlling the charger 230 in Step S108. When the charger 230 stops operating, the impedance Z_{N} as viewed from the transmission side becomes equal to Z_{OP}, which is different from both Z_{CC} and Z_{CV}.

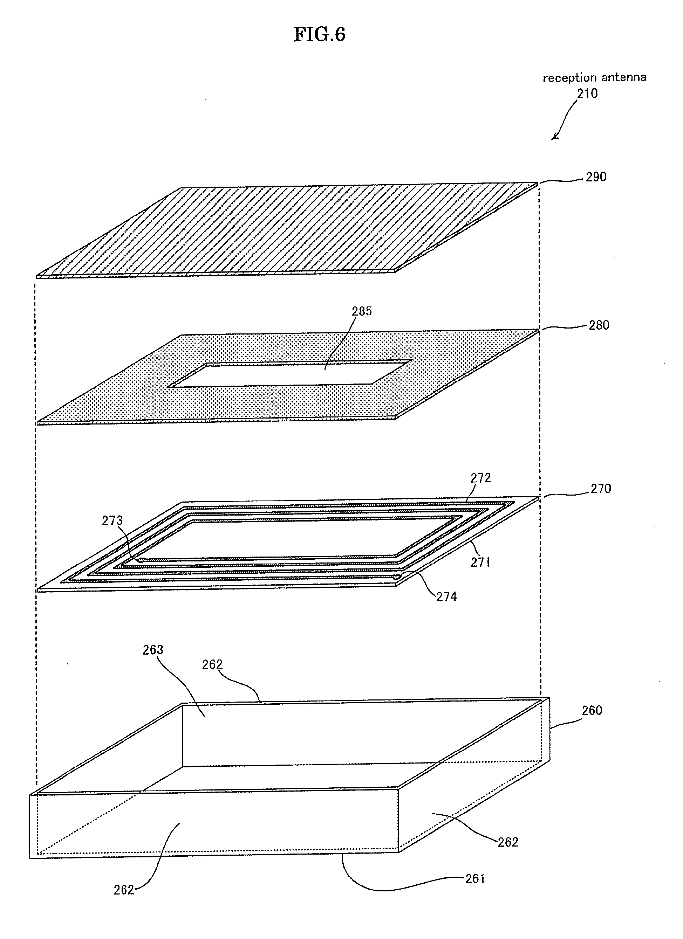

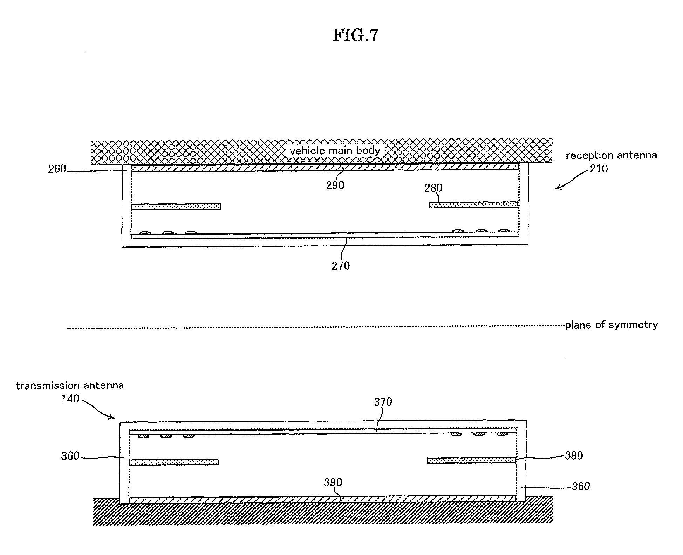

FIG. 6 is an exploded schematic perspective view of the power reception antenna 210 that can be used for the embodiment of power transmission system according to the present invention and FIG. 7 is a schematic cross-sectional view of the power reception antenna and a power transmission antenna that can be used for the embodiment of power transmission system according to the present invention, illustrating how power is transmitted between the antennas. Note that coil body 270 has the shape of a rectangular flat plate in the following description of the embodiment but the coil of the power reception antenna 210 to be used for the purpose of the present invention is by no means limited to such a shape. For example, a coil body having the shape of a circular flat plate may alternatively be used for the coil body 270. Such a coil body 270 functions as a magnetic resonance antenna part of the antenna 210. Such a magnetic resonance antenna part includes not only the inductance component of the coil body 270 but also the capacitance component attributable to the floating capacitance or the capacitance component attributable to the capacitor that is intentionally added.

Coil case 260 is employed to contain the coil body 270 that has the inductance component of the power reception antenna 210. The coil case 260 is box-shaped and made of a resin material such as polycarbonate and has an opening. Side plate sections 262 vertically extend from the respective sides of the rectangular bottom plate section 261 of the coil case 260. A top opening 263 is formed at an upper portion of the coil case 260 so as to be defined by the side plate sections 262. The power reception antenna 210 that is packed in the coil case 260 is fitted in position as the coil case 260 is fitted to the main body of the vehicle at the top opening 263 side thereof. Any technique selected from known techniques may be employed to fit the coil case 260 to the main body of the vehicle. A flange member may be fitted to the edges of the side plate sections 262 so that the coil case 260 may be fitted to the vehicle main body with an improved reliability.

The coil body 270 is formed by a rectangular flat plate-shaped base member 271 that is made of glass epoxy and a rectangular helix-like electrically conductive section 272 that is formed on the base member 271. Electro-conductive lines (not shown) are electrically connected respectively to the first end 273 located at the inside of the helix-like electrically conductive section 272 and to the second end 274 located at the outside of the helix-like electrically conductive section 272. Then, as a result, the electric power that is received by the power reception antenna 210 can be led to rectifier section 202. The coil body 270 having the above-described configuration is mounted on the rectangular bottom plate section 261 of the coil case 160 and rigidly secured to the bottom plate section 261 by an appropriate securing means.

Magnetic shield body 280 is a flat plate-shaped magnetic member having a central hollow section 285. A material showing a high specific resistance, a high magnetic permeability and a low magnetic hysteresis is desirably employed to form the magnetic shield body 280. Examples of preferable magnetic materials that can be used for the magnetic shield body 280 include ferrite. As the magnetic shield body 280 is rigidly secured relative to the coil case 260 by an appropriate means, a certain space is produced above the coil body 270. With the above-described layout, the lines of magnetic force that are generated at the side of the power transmission antenna 140 are permeated through the magnetic shield body 280 at a high ratio so that the influence of the metal objects that form the main body section of the vehicle on the lines of magnetic force in the power transmission from the power transmission antenna 140 to the power reception antenna 210 can be minimized.

A rectangular flat plate-shaped metal closure section 290 is to be placed above the shield body 280 at a position separated from the shield body 280 by a predetermined distance so as to cover and hide the top opening 263 of the coil case 260. While any metal material can be used for the metal closure section 290, aluminum is employed for the metal closure section 290 of this embodiment as an example.

As described above, a magnetic shield body 280 is arranged above the coil body 270 of the power reception antenna 210 of this embodiment of the present invention. Therefore, if the power reception antenna 210 is mounted at the bottom of the vehicle, the influence of metal objects that form the vehicle main body is minimized so that electric power can efficiently be transmitted.

The above-described structure of the power reception antenna 210 is also applied to the power transmission side antenna of the power transmission system 100. Therefore, as shown in FIG. 7, the power transmission antenna 140 is structurally symmetrical (mirror symmetry) to the power reception antenna 210 with respect to a horizontal plane.

Thus, coil body 370 is arranged in coil case 360 in the power transmission antenna 140 as in the power reception antenna 210 and magnetic shield body 380 is arranged at a position separated from the coil body 370 by a predetermined distance while coil case 160 (360?) is closed by metal closure section 390.

Now, the operation of power transmission by the power transmission system 100 of this embodiment having the above-described configuration will be described below. As described earlier, when transmitting power by the power transmission system 100, firstly frequencies are swept at the level of power that is employed for the power transmission prior to actually charging the battery with electricity and an extremal value is selected for the inverter efficiency. Then, the frequency to be used to drive the inverter section 130 in the actual operation of power transmission is determined on the basis of the selected value. Thus, for power transmission by the power transmission system 100 of this embodiment, firstly an optimum frequency is selected and subsequently power is actually transmitted by means of the selected optimum frequency.

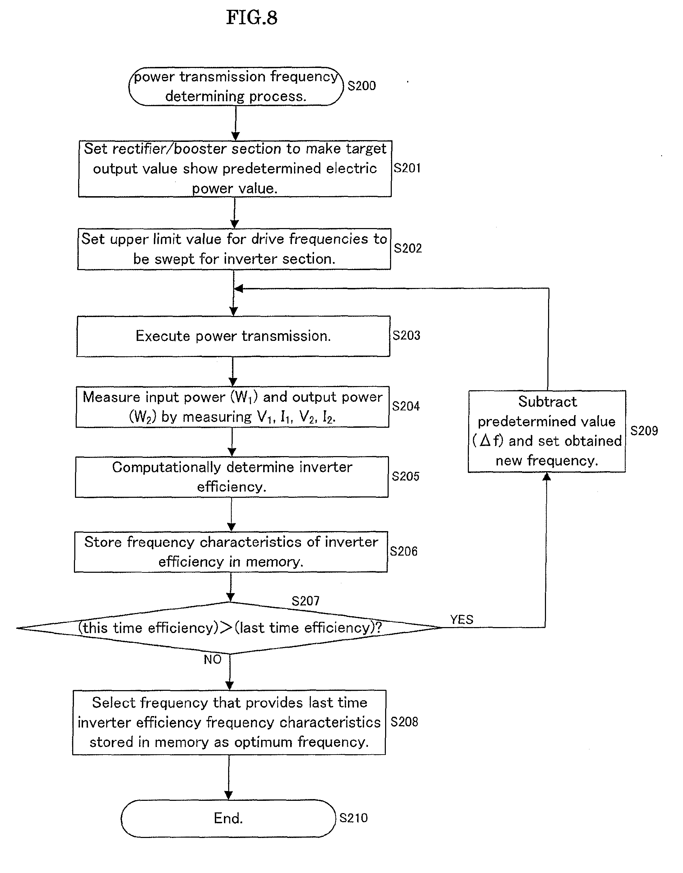

FIG. 8 is a flowchart of the power transmission frequency determining process to be used for power transmission by the power transmission system of this embodiment of the present invention. The operation that follows the flowchart is executed by the power transmission control section 150. Referring now to FIG. 8, as the power transmission frequency determining process is started in Step S200, the power transmission control section 150 sets the rectifier/booster section 120 to make the target output value thereof show a predetermined electric power value in Step S201.

In Step S202, the upper limit value for the drive frequencies to be swept for the inverter section 130 is set before starting an actual frequency sweep operation.

Then, an operation of power transmission is executed with electric power of a first level in Step S203 and the input power (W₁) and the output power (W₂) are measured by measuring V₁, I₁, V₂ and I₂ in Step S204. In Step S205, the efficiency η (= W₁/W₂) of the inverter section 130 is computationally determined based on the input power (W₁) and output power (W₂).

In Step S206, the computationally determined inverter efficiency η and the corresponding frequency are stored in the memory section 151 in association with each other. As the inverter efficiencies are computationally determined while shifting the frequency, the frequency characteristics of the inverter efficiencies are accumulated in the memory section 151.

In Step S207, it is determined if the inverter efficiency that is computationally determined this time is greater than the inverter efficiency that was computationally determined last time or not. The process proceeds to Step S208 if the answer to the question in Step S207 is negative, or NO, whereas a new frequency is selected by subtracting a predetermined value (Δf) from the frequency selected this time and the process returns to Step S203 to get on a loop if the answer to the question in Step S207 is positive, or YES.

The process proceeds to Step S208 if the answer to the question in Step S207 is NO as described above. Then, in Step S208, the frequency that provides the inverter efficiency stored in the memory section 151 last time is selected as optimum frequency for the actual power transmission.

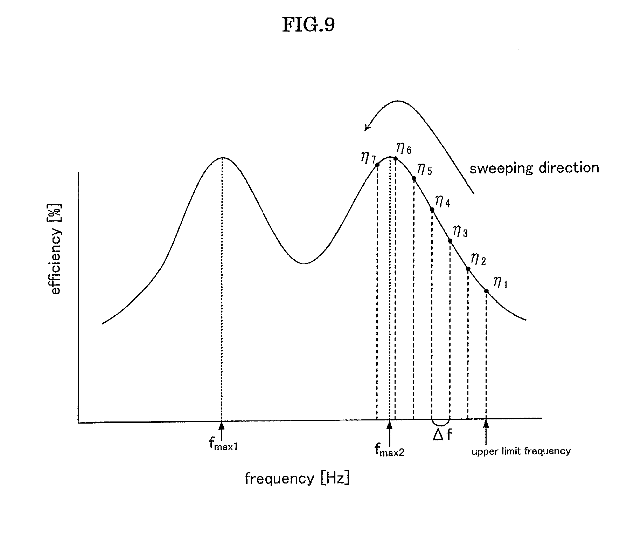

Now, the optimum frequency that is searched for by way of the above-described loop from Step S203 to Step S209 will be described in greater detail below by way of a specific example given below by referring to FIG. 9. FIG. 9 is a graph schematically illustrating an optimum frequency determining process by sweeping.

FIG. 9 shows exemplar frequency characteristics of frequencies that are assumed as candidate frequencies of the power transmission system 100 of this embodiment. With the algorithm shown in FIG. 8, the inverter efficiency is computationally determined by sequentially reducing the frequency from an upper limit value by Δf at a time. If the inverter efficiency that is computationally determined this time by way of the loop is smaller than the inverter efficiency that was computationally determined last time, the frequency that provides the inverter efficiency that was computationally determined last time is selected as optimum frequency for executing an actual operation of power transmission.

With the instance shown in FIG. 9, the inverter efficiency η₁ is provided first by an upper limit frequency. Then, a frequency value of Δf is subtracted at a time from the upper limit frequency value to determine inverter efficiencies (η₂, η₃, η₄, ···). The answer to the question in Step S207 is YES for η₁ through η₆ so that the process returns to Step 203 to get on the loop. However, when inverter efficiency n₇ is computationally determined, η₇>η₆ does not hold true. Therefore, the answer to the question in Step S207 is NO and the process proceeds to Step S208, where the frequency that provided the inverter efficiency η₆ last time is selected as optimum frequency for the actual operation of power transmission.

As described above, with the power transmission system of this embodiment of the present invention, inverter efficiencies are computationally determined, while reducing the frequency from an upper limit frequency by a predetermined frequency value at a time and, if the inverter efficiency that is computationally determined this time falls below the inverter efficiency that was computationally determined last time, the frequency that provides the inverter frequency obtained last time is selected for the actual operation of power transmission. Thus, with a power transmission system according to the present invention, the second extremal frequency, which prevents the voltage from rising to an undesirably high level if the load of the system is abruptly reduced, can be quickly selected for use to consequently curtail the time to be spent for power transmission. This will be described in greater detail hereinafter.

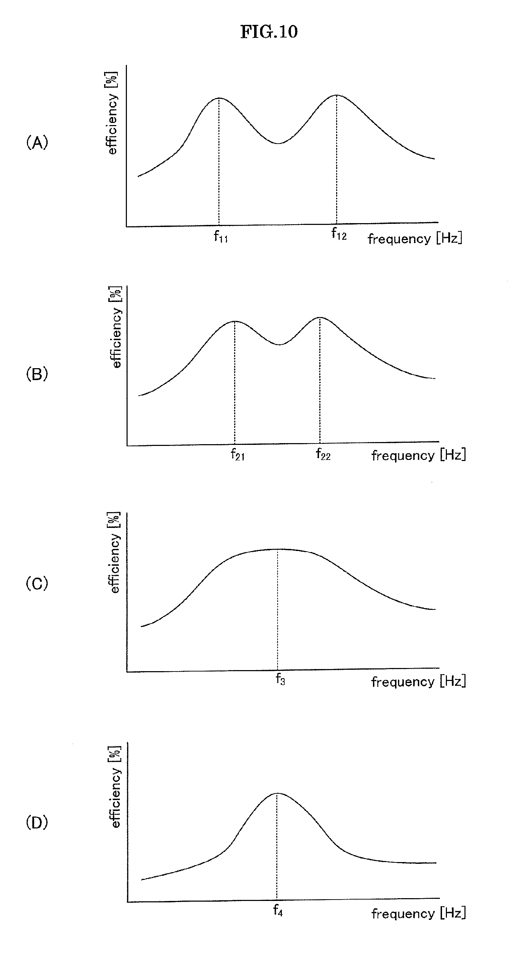

Now, the pattern of frequency characteristics relative to power transmission frequencies will be described below. FIGS. 10A through 10D are graphs illustrating relationships between the frequency and the power transmission efficiency that can be observed in this embodiment.

FIG. 10A is a graph illustrating the relationship between the frequency and the power transmission efficiency that is obtained in a state where the power reception antenna 210 and the power transmission antenna 140 are arranged positionally optimally. As seen from FIG. 10A, there are two frequencies that provide two extremal values. The lower one of the extremal frequencies is defined as the first extremal frequency and the higher one of the extremal frequencies is defined as the second extremal frequency.

FIG. 10A, FIG. 10B, FIG. 10C and FIG. 10D show graphs illustrating the relationships between the frequency and the power transmission efficiency that are observed as the state of misalignment of the power reception antenna 210 and the power transmission antenna 140 becomes increasingly remarkable in the above mentioned order.

When there is only a single frequency that provides an extremal value for the transmission efficiency as shown in FIGS. 10C and 10D, the single extremal frequency is selected in Step S208. When, on the other hand, there are two frequencies that provide extremal values including the first extremal frequency and the second extremal frequency as shown in FIGS. 10A and 10B, the extremal frequency that gives rise to an electric wall at the plane of symmetry of the power transmission antenna 140 and the power reception antenna 210 is selected in this embodiment.

Now, the concept of the electric wall and that of the magnetic wall, both of which walls are produced at the plane of symmetry of the power transmission antenna 140 and the power reception antenna 210, will be described below.

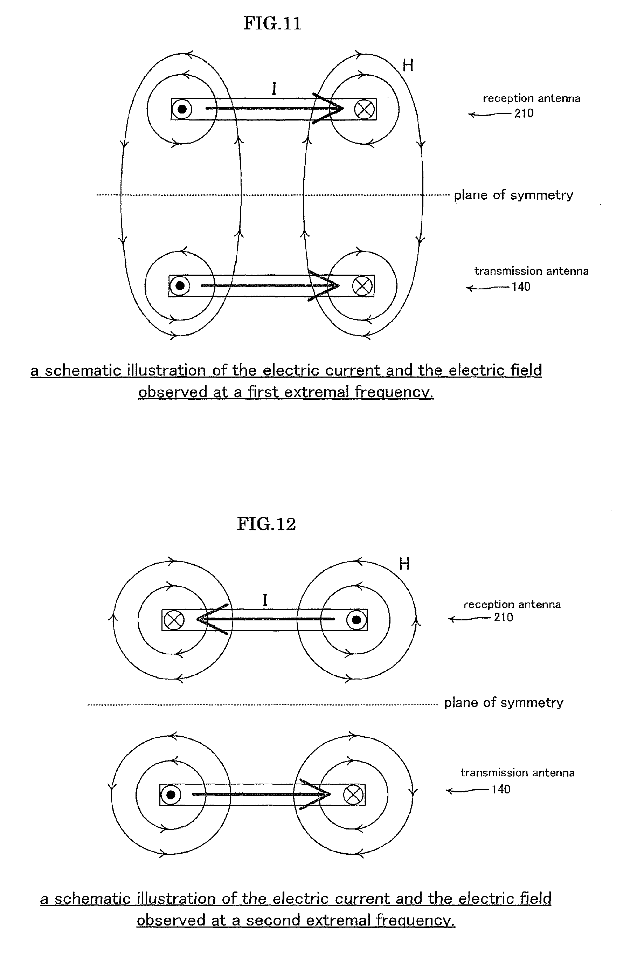

FIG. 11 is a schematic illustration of the electric current and the electric field that are observed at a first extremal frequency. At the first extremal frequency, the electric current that flows to the power transmission antenna 140 and the electric current that flows to the power reception antenna 210 are substantially in phase with each other and the magnetic field vectors of the antennas are aligned with each other at or near the middle point of the power transmission antenna 140 and the power reception antenna 210. This state is regarded as a state where the magnetic fields are directed perpendicularly relative to the plane of symmetry of the power transmission antenna 140 and the power reception antenna 210 and hence a magnetic wall is produced there.

FIG. 12 is a schematic illustration of the electric current and the electric field that are observed at the second extremal frequency. At the second extremal frequency, the electric current that flows to the power transmission antenna 140 and the electric current that flows to the power reception antenna 210 are substantially in anti-phase relative to each other and the magnetic field vectors of the antennas are aligned with each other at or near the middle point of the power transmission antenna 140 and the power reception antenna 210. This state is regarded as a state where the magnetic fields are directed in parallel with the plane of symmetry of the power transmission antenna 140 and the power reception antenna 210 and hence an electric wall is produced there.

The above-described conceptual description relies on the corresponding description given in Takehiro Imura & Yoichi Hori, "The Transmission Technology Based on Electromagnetic Resonance Coupling", IEEEJ Journal, Vol. 129, No. 7, 2009 and Takehiro Imura, Hiroyuki Okabe, Toshiyuki Uchida and Yoichi Hori, "A Study on Magnetic Field Coupling and Electric Field Coupling of Non-Contact Power Transmission As Viewed from Equivalent Circuits", IEEJ, Trans. IA, Vol. 130, No. 1, 2010.

Now, in instances where there are two extremal frequencies including a first extremal frequency and a second extremal frequency that provides extremal values, the reason why the extremal frequency that gives rise to an electric wall at the plane of symmetry of the power transmission antenna 140 and the power reception antenna 210 is selected according to the present invention will be described below.

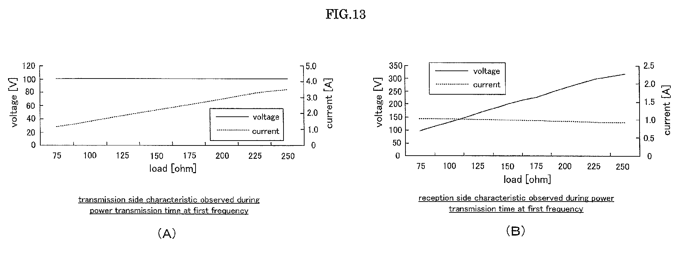

FIG. 13A and 13B are graphs schematically illustrating the transmission side characteristic and the reception side characteristic at an extremal frequency (first frequency) that gives rise to a magnetic wall out of the extremal frequencies that provide two extremal values. FIG. 13A is a graph showing how the voltage (V₁) and the electric current (I₁) at the power transmission side change as a function of the change in the battery 240 (load) and FIG. 13B is a graph showing how the voltage (V₃) and the electric current (I₃) at the power reception side change as a function of the change in the battery 240 (load). With characteristics as shown in FIGS. 13A and 13B, it will be seen that the voltage rises at the power reception side as the load of the battery 240 (load) is increased.

At a frequency that gives rise to a magnetic wall as described above, the power reception antenna 210 appears as if it were a constant current source as viewed from the battery 240 side. When power is transmitted at a frequency where the power reception antenna 210 operates as if a constant current source and an emergency suspension of operation occurs due to trouble at side of the battery 240 that is a load, a voltage rise takes place at the opposite ends of the power reception antenna 210.

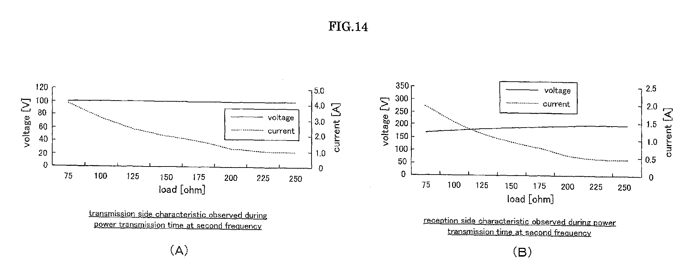

On the other hand, FIGS. 14A and 14B are graphs schematically illustrating the transmission side characteristic and the reception side characteristic at another extremal frequency (second frequency) that gives rise to an electric wall out of the extremal frequencies that provide two extremal values. FIG. 14A is a graph showing how the voltage (V₁) and the electric current (I₁) at the power transmission side change as a function of the change in the battery 240 (load) and FIG. 14B is a graph showing how the voltage (V₃) and the electric current (I₃) at the power reception side change as a function of the change in the battery 240 (load). With characteristics as shown in FIGS. 14A and 14B, it will be seen that the electric current falls at the power reception side as the load of the battery 240 (load) is increased.

Thus, at a frequency that gives rise to an electric wall as described above, the power reception antenna 210 appears as if it were a constant voltage source as viewed from the battery 240 side. When power is transmitted at a frequency where the power reception antenna 210 operates as if a constant voltage source and an emergency suspension of operation occurs due to trouble at side of the battery 240 that is a load, no voltage rise takes place at the opposite ends of the power reception antenna 210. Therefore, with a power transmission system according to the present invention, no voltage rise takes place if the load of the system abruptly falls so that power can be transmitted on a stable and reliable basis.

As pointed out above, the charging circuit appears as a current source to the battery 240 (load) at the power reception side with the characteristics shown in FIGS. 13A and 13B, whereas the charging circuit appears as a voltage source to the battery 240 (load) at the power reception side with the characteristics shown in FIGS. 14A and 14B. Since characteristics shown in FIGS. 14A and 14B with which the electric current is reduced as the load is increased are preferable to the battery 240 (load), when there are two extremal frequencies including a first extremal frequency and a secnd extremal frequency in this embodiment, the extremal frequency that gives rise to an electric wall at the plane of symmetry of the power transmission antenna 140 and the power reception antenna 210 is selected.

Thus, with a power transmission system according to the present invention, if there are two frequencies that provide extremal values for the transmission efficiency, an optimum frequency can be selected quickly for power transmission and hence an operation of power transmission can be conducted efficiently in a short period of time.

As described above, if there are two frequencies that provide extremal values and the extremal frequency that gives rise to an electric wall at the plane of symmetry of the power transmission antenna 140 and the power reception antenna 210, the charging circuit appears as a voltage source to the battery 240 (load). This provides an additional advantage of easy handling because, if the output to the battery 240 fluctuates regardless of charge control, the output of the inverter section 130 also fluctuates accordingly. Furthermore, there is not any need of providing a device for automatically minimizing the power being supplied if an emergency suspension of operation of the charger 230 occurs.

When there are two frequencies that provide two extremal values and the extremal frequency that gives rise to an electric wall at the plane of symmetry between the power transmission antenna 140 and the power reception antenna 210 is selected, the rectifier 220 appears as a voltage source as viewed from the charger 230. This provides an additional advantage of easy handling because, if the output to the battery 240 fluctuates regardless of charge control, the output of the inverter section 130 also fluctuates accordingly. Furthermore, there is not any need of providing a device for automatically minimizing the power being supplied if an emergency suspension of operation of the charger 230 occurs.

To the contrary, when there are two frequencies that provide two extremal values and the extremal frequency that gives rise to a magnetic wall at the plane of symmetry between the power transmission antenna 140 and the power reception antenna 210 is selected, the supply voltage needs to be controlled as the output of the charger 230 is reduced. Then, additionally there arises need for a communication means and a detection means to consequently raise the overall cost of the power transmission system.

As described above, for the sweep operation of the power transmission system 100 of this embodiment, firstly an upper limit value is selected for the drive frequency of the inverter section 130 and the sweep operation is conducted by sequentially subtracting a predetermined value of Δf at a time from the upper limit value. If the sweep operation is conducted in the other way so that a lower limit value is firstly selected for the drive frequency of the inverter section 130 and then the sweep operation is conducted by sequentially adding a predetermined value of Δf at a time to the lower limit value, the first extremal frequency may possible be selected as optimum frequency because the first extremal frequency is lower than the second extremal frequency. As pointed above, an actual operation of power transmission is preferably executed with the second extremal frequency rather than the first extremal frequency. Thus, for the above-described reason, the sweep operation is conducted by sequentially subtracting a predetermined value of Δf at a time from the upper limit value so that the second extremal frequency may reliable be selected as optimum frequency.

Now referring back to FIG. 8, the process proceeds to Step S210 to end the process of selecting an optimum frequency.

Thus, with the power transmission system of this embodiment, in instances where there are two frequencies that provides extremal values for the transmission efficiency, an optimum frequency can be selected for power transmission so that the operation of power transmission can be conducted efficiently.

Additionally, with the power transmission system of this embodiment, the second extremal frequency at which power can stably be transmitted preventing the voltage from rising to an undesirably high level if the load of the system is abruptly reduced, can be quickly selected for use to consequently curtail the time to be spent for power transmission.

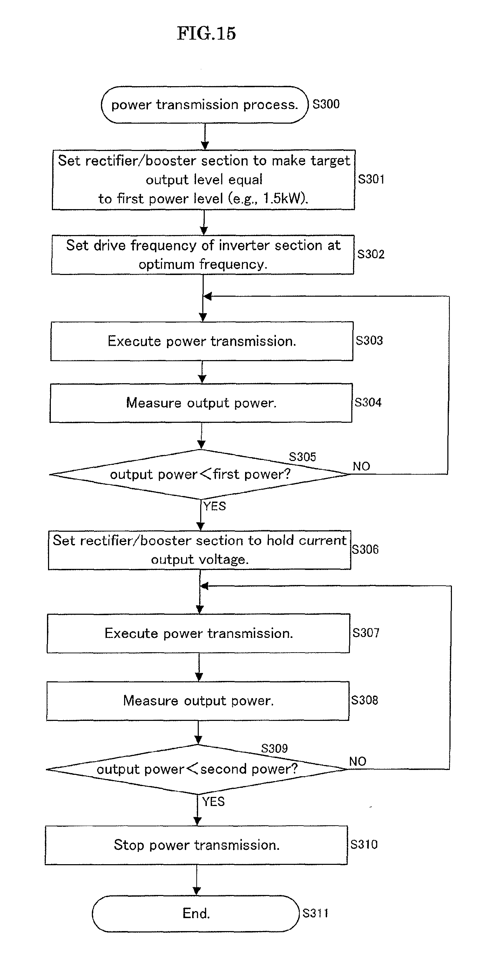

Now, the actual power transmission process to be conducted for charging the battery with the optimum frequency that is determined in the above-described manner will be described below. FIG. 15 is a flowchart of the power transmission process of the embodiment of power transmission system according to the present invention. The process that follows the flowchart is executed by the power transmission control section 150. As the power transmission process is started in Step S300, the power transmission control section 150 sets the rectifier/booster section 120 so as to make the target output level equal to a first power level (e.g., 1.5 kW) in Step S301.

In Step S 302, the drive frequency of the inverter section 130 is made to be equal to the optimum frequency determined as a result of the above-described optimum frequency determining process. Then, the operation of power transmission is executed in Step S303.

In Step S304, the output power is measured by means of the voltage V₂ and the electric current I₂ output from the inverter section 130.

In Step S305, it is determined if the measured electric power is lower than the first power level or not. When the inverter section 130 can output electric power at the first power level, the charger 230 at the reception side is in a constant current charging operation so that the impedance is Z_{N}=Z_{CC} as viewed from the transmission side. On the other hand, when the reception side shifts the charging mode from constant output charging to constant voltage charging, the reception side charger 230 starts a constant voltage charging operation so that the impedance is Z_{N} = Z_{CV} as viewed from the transmission side. As the impedance is changed in this way, the electric power that is being output from the inverter section 130 falls below the first power level. The change of situation at the reception side is detected in Step S305.

If the answer to the question in Step S305 is negative, or NO, the process returns to Step S303 to get on a loop. If, on the other hand, the answer to the question in Step S305 is positive, or YES, the process proceeds to Step S306 to set the rectifier/booster 120 so as not to change the output voltage to the inverter section 130.

In Step S307, the execution of the operation of power transmission is executed and, in Step S308, the output power is measured by means of the voltage V₂ and the electric current I₂ output from the inverter section 130.

In Step S309, it is determined if the measured output power is lower than the second power level or not. When the inverter section 130 can output electric power at not lower than the second power level, the reception side is in a constant voltage charging operation so that the impedance is Z_{N}=Z_{CV} as viewed from the transmission side. On the other hand, when operation of charging the battery 240 is completed at the reception side and the operation of the charger 230 is stopped, the impedance is Z_{N} = Z_{OP} as viewed from the transmission side. When there is such a change in the impedance, the electric power output from the inverter section 130 becomes lower than the second power level. The change of situation at the reception side is detected in Step S309.

If the answer to the question in Step S309 is negative, or NO, the process returns to Step S307 to get on a loop. If, on the other hand, the answer to the question in Step S309 is positive, or YES, it is assumed that the operation of charging the battery 240 at the reception side is completed so that the process proceeds to Step 310 to stop power transmission and then to Step S311 to end the process.

With a power transmission system 100 according to the present invention as described above in detail, during charging operation for battery 240 at the reception side, if a constant output charging operation is being conducted, if a constant voltage charging operation is being conducted or the current charging operation is stopped is detected by looking into a change in the output power based on a change in the impedance so that power can be transmitted from the transmission side to the reception side in an appropriate mode of operation so that the power transmitting operation can be executed efficiently.

### [Industrial Applicability]

A power transmission system according to the present invention can suitably be used for a system for charging the vehicle-mounted batteries of electric automotive vehicles (EV) and hybrid electric automotive vehicles (VEH) that are coming into use in an accelerated manner in recent years. With existing power transmission systems, frequencies are swept to select an optimum frequency for efficient transmission of energy but it has not been possible to simply apply the known technique of frequency sweep to wireless power transmission systems using the magnetic resonance method. With a power transmission system according to the present invention, the inverter efficiency is computationally determined while lowering the operational frequency from an upper limit frequency by a predetermined unit frequency at a time to determine the frequency that provides the highest inverter efficiency so that the second extremal frequency that ensures a stable operation of power transmission can be quickly determined and hence the time required for the operation of power transmission can be curtailed to provide greater industrial advantages.

### [Explanation of Reference Symbols]

- 100:: power transmission system
- 110:: AC power supply section
- 120:: rectifier/booster section
- 130:: inverter section
- 140:: power transmission antenna
- 150:: power transmission control section
- 151:: memory section
- 210:: power reception antenna
- 220:: rectifier
- 230:: charger
- 240:: battery
- 250:: charge control section
- 260:: coil case
- 261:: bottom plate section
- 262:: side plate sections
- 263:: (top) opening
- 270:: coil body
- 271:: base member
- 272:: electrically conductive section
- 273:: first end
- 274:: second end
- 280:: magnetic shield body
- 285:: hollow section
- 290:: metal closure section
- 360:: coil case
- 370:: coil body
- 380:: magnetic shield body
- 390:: metal closure section

## Claims

1. A power transmission system comprising an inverter section for outputting AC power of a predetermined frequency, a power transmission antenna for receiving AC power from the inverter section as input and a control section for controlling the frequency of the AC power output from the inverter section and computationally determining the inverter efficiency of the inverter section for the purpose of transmitting electric energy to a power reception antenna disposed oppositely relative to the power transmission antenna by way of an electromagnetic field, **characterized in that** the control section controls the system by computationally determining the inverter efficiency, while lowering the operational frequency from an upper limit frequency by a predetermined unit frequency at a time, and selecting the frequency that provides the highest inverter efficiency for the system to transmit power.

2. A power transmission system comprising an inverter section for outputting AC power of a predetermined frequency, a power transmission antenna for receiving AC power from the inverter section as input and a control section for controlling the frequency of the AC power output from the inverter section and computationally determining the inverter efficiency of the inverter section for the purpose of transmitting electric energy to a power reception antenna disposed oppositely relative to the power transmission antenna by way of an electromagnetic field, **characterized in that** the control section controls the system by computationally determining the inverter efficiency, while lowering the operational frequency from an upper limit frequency by a predetermined unit frequency at a time, and, when the computationally determined inverter efficiency falls below the inverter efficiency that was computationally determined last time, selects the frequency that provides the inverter efficiency computationally determined last time to transmit power.
